(19) **Europäisches Patentamt**

**European Patent Office**

**Office européen des brevets**

(11) **EP 0 752 812 B1**

(12) **EUROPÄISCHE PATENTSCHRIFT**

(45) Veröffentlichungstag und Bekanntmachung des Hinweises auf die Patenterteilung:
**28.10.1998 Patentblatt 1998/44**

(21) Anmeldenummer: **95909617.3**

(22) Anmeldetag: **31.01.1995**

(51) Int. Cl.$^6$: **A01D 34/73**

(86) Internationale Anmeldenummer:
**PCT/DE95/00117**

(87) Internationale Veröffentlichungsnummer:
**WO 95/26625 (12.10.1995 Gazette 1995/43)**

(54) **GERÄT ZUM SCHNEIDEN VON PFLANZEN**

APPARATUS FOR CUTTING PLANTS

APPAREIL DESTINE A COUPER DES VEGETAUX

(84) Benannte Vertragsstaaten:
**DE ES FR GB IT NL**

(30) Priorität: **30.03.1994 DE 4411002**

(43) Veröffentlichungstag der Anmeldung:
**15.01.1997 Patentblatt 1997/03**

(73) Patentinhaber: **ROBERT BOSCH GMBH**
**70442 Stuttgart (DE)**

(72) Erfinder:
• **ZILLY, Guenter**
**D-70771 Leinfelden-Echterdingen (DE)**
• **HEPPERLE, Wilhelm**
**D-89198 Westerstetten (DE)**

• **EGER, Beate**
**D-70771 Leinfelden-Echterdingen (DE)**
• **RUESS, Albert**
**D-70794 Filderstadt (DE)**
• **SCHNELLE, Klaus-Peter**
**D-71254 Ditzingen (DE)**
• **HOUBEN, Jan P.**
**NL-4834 LV Breda (NL)**
• **JUNG, Bob**
**NL-4614 AK Bergen op Zoom (NL)**

(56) Entgegenhaltungen:
| | |
|---|---|
| EP-A- 0 168 254 | EP-A- 0 215 416 |
| EP-A- 0 525 195 | US-A- 4 104 796 |
| US-A- 4 151 646 | US-A- 4 183 138 |
| US-A- 4 259 782 | US-A- 4 738 085 |

**Beschreibung**

Stand der Technik

Die Erfindung bezieht sich auf ein Gerät zum Schneiden von Pflanzen nach der Gattung des Anspruchs 1.

Es ist schon ein Gerät zum Schneiden von Pflanzen gemäß EP 351 989 bekannt, bei dem ein Nachstellen der Fadenlänge des Schneidfadens durch einen fliehkraftverschiebbaren Schieber mit Nocken nach dem Stoppen beim erneuten Starten des Motors gesteuert ird. Beim Stoppen des Gerätes bzw. des Motors wird der Nocken bzw. der Schieber durch Federmittel in die entriegelnde, ursprüngliche Position zurückgestellt. Beim erneuten Starten kann sich deshalb die Spule innerhalb des drehmitnehmenden Topfes relativ zu diesem soweit verrehen, daß ein spulenseitiger Ahschlag zur Anlage an den Nocken kommt und dadurch das Verdrehen beendet.

Das bekannte Gerät arbeitet zuverlässig, besteht aber aus verhältnismäßig vielen Einzelteilen und erfordert bei Schneidfadenabnutzung bzw. Schneidfadenverlust das Aus- und Wieder-Einschalten des Geräts zur Schneidfadennachstellung. Ein automatisches Nachstellen der verlorenen Fadenlänge während des Gerätebetriebs ist nicht möglich.

Ein entsprechendes Gerät zum Schneiden von Pflanzen ist auch gemäß US 4 347 666 bekannt. Bei diesem gibt ein quer zur Drehachse verschiebbarer Schieber mit einem Nocken Anschläge der Spule frei oder arretiert sie. Damit wird während des Schneidens von Pflanzen die Fadennachstellung gesteuert. Der fliehkraftgesteuerte Schieber wird durch eine Feder in seiner verriegelnden Ursprungsposition gehalten, wobei die Fadennachstellung nur dann funktioniert, wenn der Schneidfaden arbeitet, also Pflanzen schneidet. Die Fadennachstellung funktioniert nicht, wenn der Faden, ohne auf zu schneidendes Gut zu treffen, in der Luft rotiert. Falls beim Abnutzen des Fadens dessen freies Ende eine bestimmte, kritische Länge unterschreitet, d.h. wenn der Schneidfaden kein Schneidgut mehr erreichen kann, funktioniert die automatische Fadennachstellung nicht. Das Gerät muß ausgeschaltet werden, damit die Fadennachstellung von Hand erfolgen kann.

Gemäß US 4 104 796, welche ein Gerät nach dem Oberbegriff von Anspruch 1 zeigt, ist ein weiteres Gerät zum Schneiden von Pflanzen bekannt, bei dem zwei federgestützte, fliehkraftverstellbare Nocken mindestens einen spulenseitigen Anschlag freigeben bzw. sperren. Dadurch erfolgt ein drehzahlabhängiges, automatisches Nachstellen des Schneidfadens.

Dieses Gerät ist aufgrund der Federn verhältnismäßig aufwendig konstruiert. Die Federn müssen genau kalibriert sein und die tatsächliche Masse muß mit der berechneten Masse jedes Nockenträgers genau übereinstimmen. Schon geringe Federkraftabweichungen und Masseunterschiede können die Regelcharakteristik der Fadennachstellung so verändern, daß diese im vorgegebenen Drehzahlbereich nicht anspricht. Zudem sind derartige Masse-Feder-Systeme äußerst störempfindlich. Bereits kleine Staub-, Feuchtigkeits- oder Wärmemengen kön nen zum Versagen bzw. zum verfrühten Ansprechen der Fadennachstellung führen. Die Federn müssen daher häufig gereinigt und justiert werden. Darüberhinaus ändert sich die Federcharakteristik der Federn drehzahlabhängig aufgrund der auf die Federn einwirkenden Fliehkräfte. Außerdem können die Federn aufgrund ihrer Eigenmasse die Fliehkraftverstellung störend beeinflussen.

Vorteile der Erfindung

Das erfindungsgemäße Gerät zum Schneiden von Pflanzen mit dem kennzeichnenden Merkmal des Anspruchs 1 hat den Vorteil, daß vollständig auf Kraftspeicher bzw. Federn als Regelungsmittel verzichtet werden kann. Statt dessen werden die Regelungsmittel durch die Gestaltung der Abstützflächen zwischen der Fadenspule und der schieber- bzw. riegelartigen Spulenarretierung realisiert. Deren Gestalt hängt ab von der Fadenmasse und der Fadenfliehkraft.

Infolge des einfachen Aufbau sind der Fertigungs- und der Wartungsaufwand für das Gerät gering. Die automatische Fadennachstellung des Geräts arbeitet bei hoher Staub-, Feuchtigkeits- und Wärmeeinwirkung sowie auch bei starken Drehzahlschwankungen zuverlässig und deutlich weniger störanfällig als federbestückte Fadennachstellungen.

Das Regelverhalten der erfindungsgemäßen Fadennachstellung ist besonders stabil gegen Schwankungen der Netz-Drehzahl und gegen Schwingungen des Gerätemotors bzw. des Gerätes selbst. Dies liegt daran, daß zwischen einem am Topf drehfest, verschieblich gelagerten Schieber und der Schneidfadenspule besonders gestaltete Schrägabstützmittel angeordnet sind, wobei der Schieber eine Exzentermasse trägt.

Zwischen der Kraft der Exzentermasse des Schiebers und Fliehkraft der Schneidfäden, die ein Drehmoment an der Spule erzeugen, wird Käftegleichgewicht hergestellt. Wenn der Schneidfaden zu kurz wird, verringert sich die Schneidfaden-Fliehkraft, so daß die Exzentermassen-Kraft überwiegt und sich der Schieber in die Entriegelungsstellung verschiebt.

In dieser Stellung reicht die verringerte Schneidfadenfliehkraft aus, die Spule gegenüber dem Schieber zu verdrehen und den Schneidfaden nach außen zu ziehen, wobei sich dieser verlängert und wobei sich dessen Fliehkraft ständig erhöht. Zur Begrenzung der Schneidfadenlänge wird die Drehung der Spule nach einem bestimmten Verdrehweg gestoppt. Dazu wird der Schieber mittels der erhöhten Schneidfadenfliehkraft in seine Verriegelungsstellung verstellt.

Das Kräftegleichgewicht zwischen Schieber und Spule in der Verriegelungsstellung wird durch die Schrägabstützung gehalten, die in besonders vorteilhafter Weise durch die konkave Kontur einer Anschlagfläche der Spule gegenüber dem Nocken des Schiebers verwirklicht wird. Außerdem wird zwischen einem Leitkörper und dem Nocken der Schiebers durch die Form der Leitflächenkontur des Leitkörpers ein solches Kräftegleichgewicht erzeugt, daß die Gleitreibung, ohne in Haftreibung überzugehen, konstant bleibt.

Weitere Vorteile der Erfindung ergeben sich aus den Merkmalen der abhängigen Ansprüche.

Zeichnung

Ein Ausführungsbeispiel der Erfindung ist in der nachfolgenden Beschreibung anhand der Zeichnung näher erläutert.

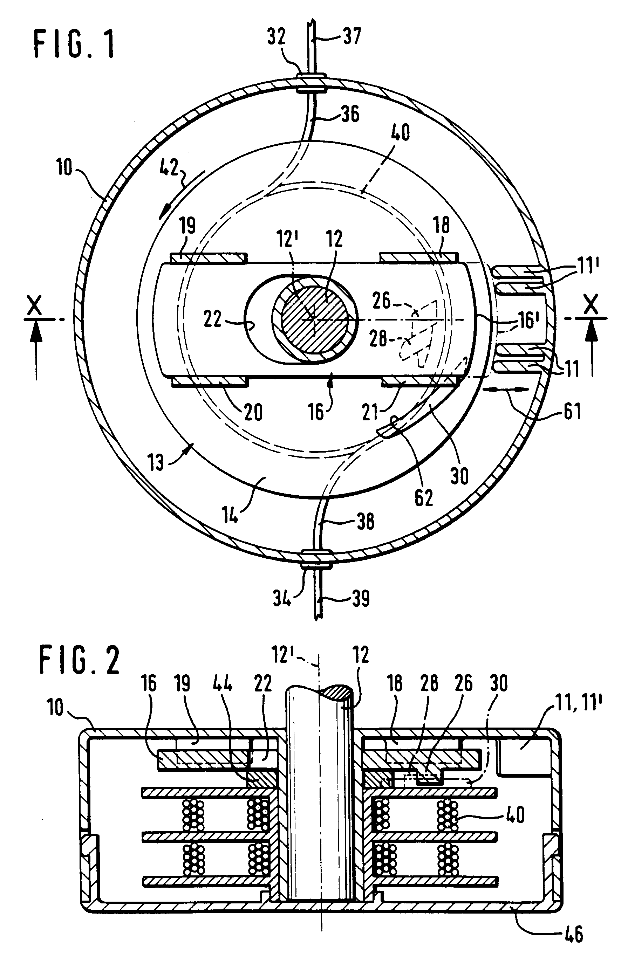

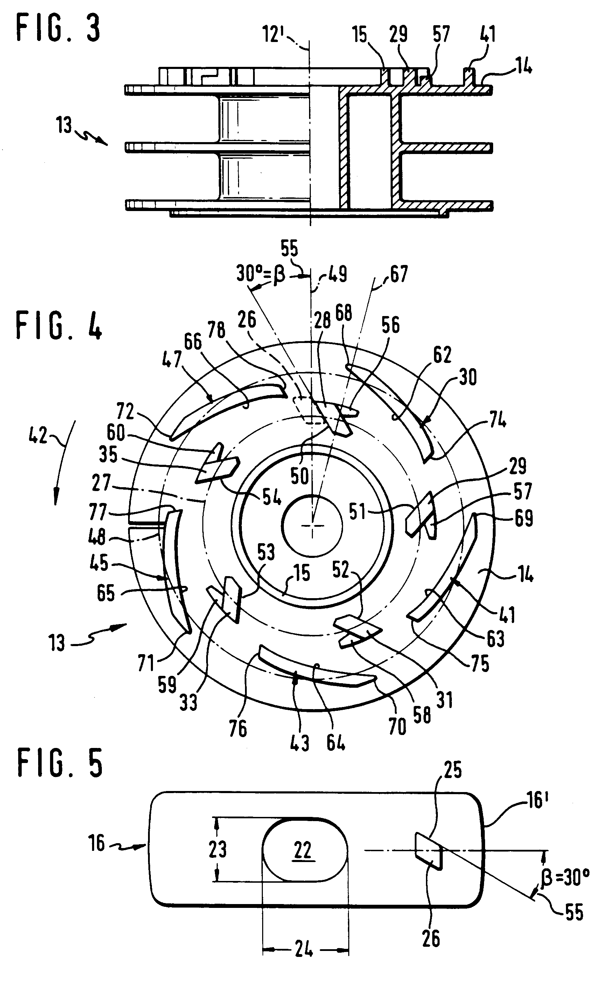

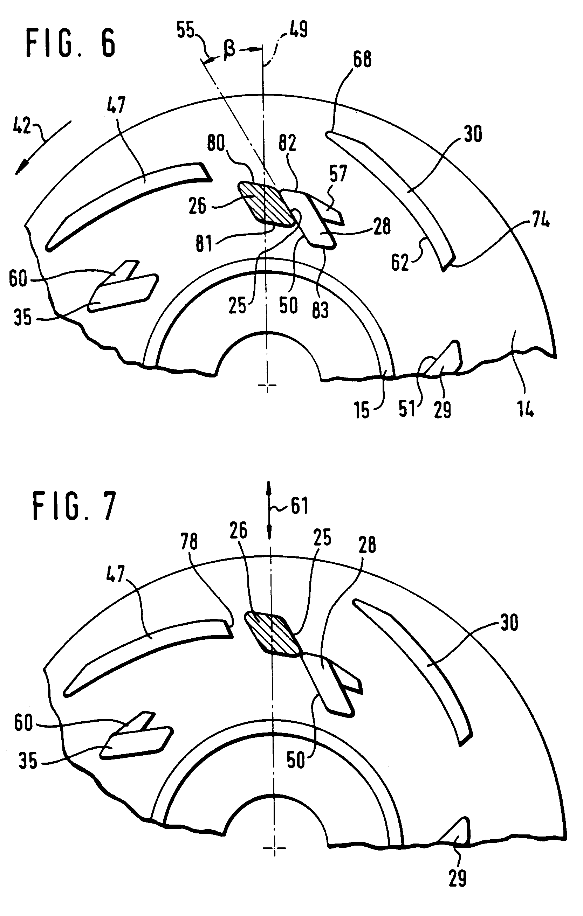

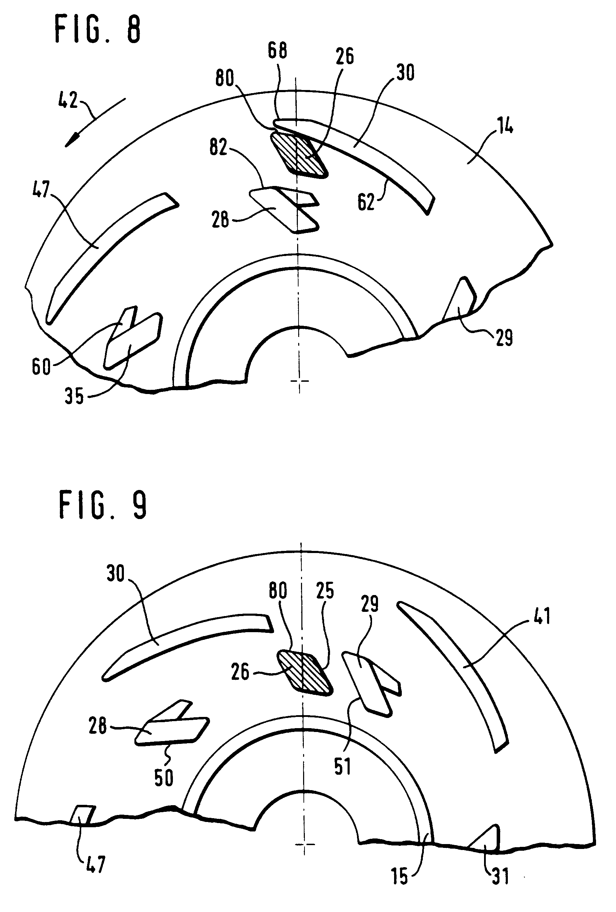

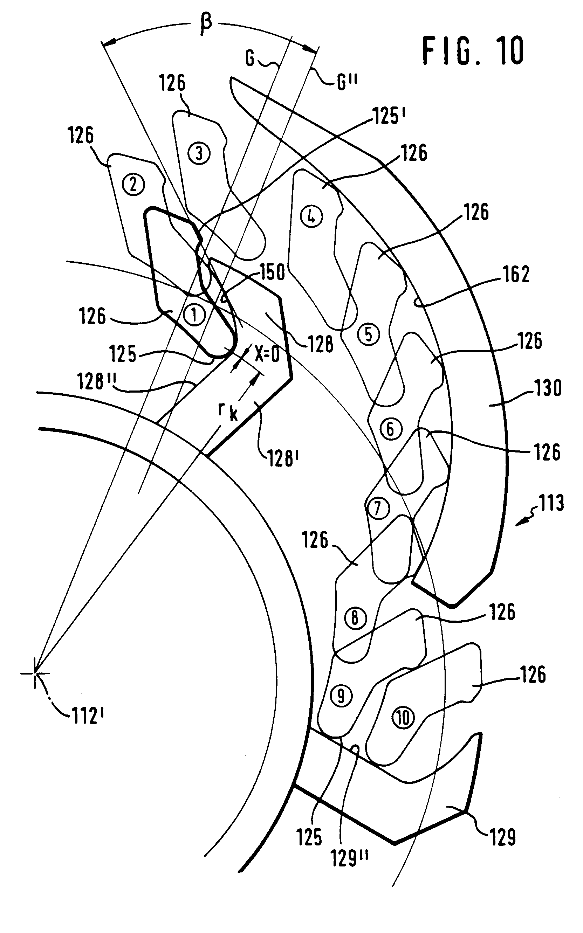

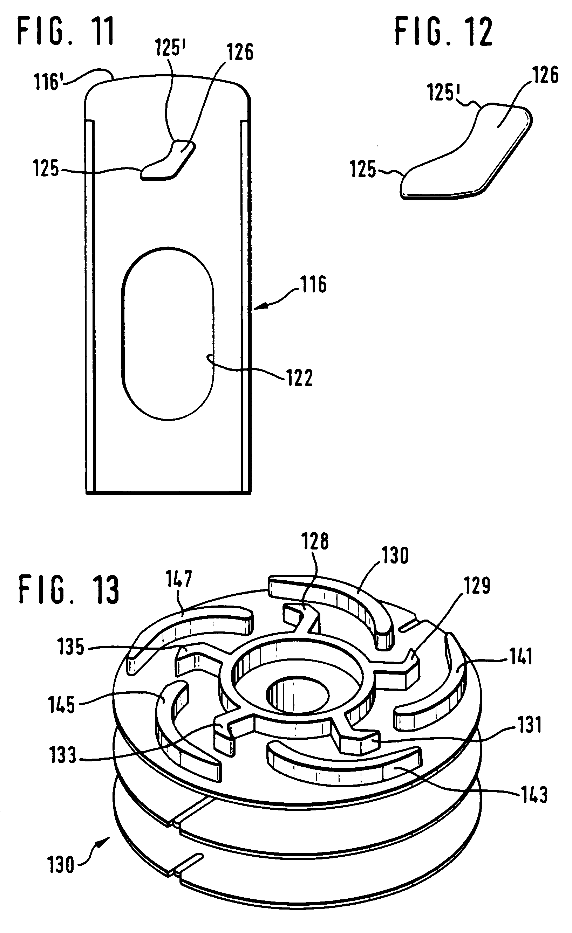

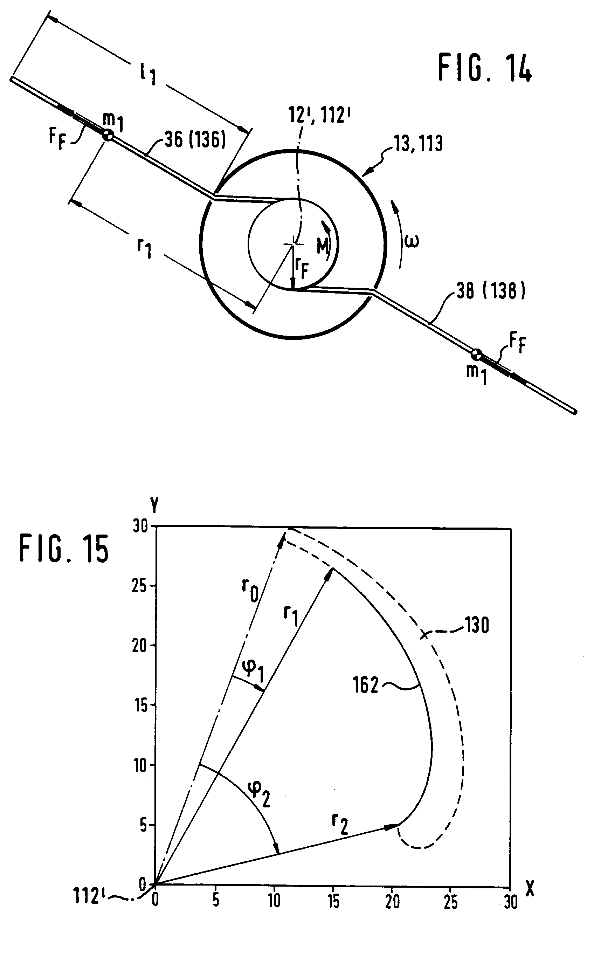

Es zeigen Figur 1 eine Schnittdarstellung der Draufsicht des Topfes mit der Spule und dem Schieber, Figur 2 eine Seitenansicht der Figur 1, Figur 3 eine Seitenansicht der Spule, Figur 4 eine Draufsicht auf die Spule, Figur 5 eine Ansicht der Nockenseite des Schiebers, Figur 6 einen vergrößerten Ausschnitt der oberen Stirnseite der Spule gemäß Figur 4 mit dem Nocken in Verriegelungsposition gegenüber dem Anschlag, Figur 7 einen Ausschnitt der oberen Stirnseite der Spule gemäß Figur 6 mit dem aus der Verriegelungsposition verschobenen Nocken, Figur 8 einen Ausschnitt gemäß Figur 6 unmittelbar nach dem Entriegeln des Nockens und Figur 9 einen Ausschnitt gemäß Figur 6 mit dem Nocken kurz vor Erreichen der erneuten Verriegelungsposition, Figur 10 ein Ausführungsbeispiel eines mathematisch/geometrisch gestalteten Nockens, Anschlags und Leitkörper während eines zehnfach unterteilten Regelschritts zur Fadennachstellung, Figur 11 einen Schieber mit mathematisch/geometrisch gestaltetem Nocken, Figur 12 den Nocken gemäß Figur 11 als Einzelheit, Figur 13 die räumliche Darstellung einer Spule gemäß Figur 10, Figur 14 eine schematische Darstellung der Spule mit den Regelkräften und Figur 15 eine mathematische Kurve im X/Y-Koordinatensystem, die der Kontur der Leitfläche gemäß den Figuren 10 und 13 entspricht.

Beschreibung des Ausführungsbeispiels

Die in Figur 1 abgebildete Draufsicht eines Topfes 10 am unteren Ende eines nicht dargestellten Geräts zum Schneiden von Pflanzen, der drehfest mit einer Antriebswelle 12 verbunden ist, zeigt die zentrisch darin angeordnete Spule 13 mit Blick auf deren obere, maschinenzugewandte Stirnseite 14 und auf einen topfseitig gelagerten Schieber 16. Der Schieber 16 ist zwischen vier Schiebeführungen 18, 19, 20, 21 auf einander gegenüberliegenden Seiten geführt und ist in seiner radialen Auslenkung durch zwei elastische Anschlagpaare 11, 11' begrenzt, die ein Verklemmen des Schieber in seiner Anschlagposition verhindern. Die Anschlagposition des Schiebers 16 ist durch eine vor der fett gezeichneten Stirnseite 16' gestrichelte parallele Linie deutlich gemacht. Der Schieber 16 trägt ein zentrales Langloch 22 mit einem kleineren Durchmesser 23 und einem größeren Durchmesser 24. Auf seiner in Darstellungsrichtung rechten Seite trägt der Schieber 16 auf der der Spule 13 zugewandten Seite einen Nocken 26 mit rhombischem Querschnitt. Der Nocken 26 stützt sich seitlich gegen einen Anschlag 28, der, ebenso wie ein länglicher Leitkörper 30, axial in Richtung des Betrachters hervorstehend auf der Stirnseite 14 angeordnet ist.

Am Umfang des Topfes 10 treten auf entgegengesetzten Seiten durch jeweils eine Öse 32, 34 ein erster und zweiter Schneidfaden 36, 38 mit ihren freien Enden 37, 39 radial nach außen. Infolge der Fliehkraft bei rotierender Spule 13 beim Betrieb des Gerätes wirken die Kanten der freien Enden 37, 39 als Schneiden. Sie unterliegen dabei ständiger Abnutzung durch Abplatzen von Fadenstücken. Dadurch werden die freien Enden 37, 39 verkürzt.

Die Spule 13 ist gegenüber dem Topf 10 um die Spulenmitte 12' drehbar gelagert. Bei Anliegen des Nockens 26 am Anschlag 28 der Spule 13 ist die Verriegelungsstellung hergestellt, in der die Spule 13 am Drehen gegenüber dem Topf 10 gehindert wird. Durch radiales Verschieben des Nockens 26 gegenüber dem Anschlag 28 ist die Entriegelungsstellung erreicht, wenn der Anschlag 28 freigegeben ist. Damit kann sich die Spule 13 gegenüber dem Topf 10 verdrehen. Die Verund Entriegelungsstellung des Nockens 26 wird durch selbsttätiges Verstellen des Schiebers 16 entlang den Schiebeführungen 18, 19, 20, 21, gemäß dem Doppelpfeil 61 hergestellt.

Die Spule 13 trägt eine Fadenwicklung 40, die durch zwei gestrichelt, konzentrisch um den Mittelpunkt der Antriebswelle 12 gezeichnete Kreise dargestellt ist. In die Fadenwicklung 40 gehen die freien Enden 37, 39 der Schneidfäden 36, 38 bogenförmig über.

Ein Pfeil 42 zeigt die Drehrichtung der Spule 13 gegenüber dem Topf 10 zum Nachstellen der Fadenlänge.

Die in Figur 2 gezeigte seitliche Schnittdarstellung der Figur 1 entsprechend den Pfeilen X-X verdeutlicht die Anordnung der Antriebswele 12 gegenüber dem Topf 10, die Lage der als Doppelspule ausgestalteten Spule 13 mit den Schneidfäden 36, 38 und die Lage des Schiebers 16 mit dem Nocken 26. Die Anordnung des Schiebers 16 zwischen den durch stirnseitige Vorsprünge des Topfes 10 gebildeten Schiebeführungen 18, 19, 20, 21 sowie der Leitkörper 30, ein Distanzring 44 sowie ein den Topf 10 verschließender Deckel 46 sind deutlich erkennbar.

Der Distanzring 44 sichert einen axialen Abstand zwischen der Spule 13 und dem Schieber 16, damit deren einander zugewandten axialen Stirnseiten sich nicht berühren, um nicht die freie Verschiebbarkeit und damit die Funktion des Schiebers 16 zu behindern.

Die in Figur 3 als Einzelteil im seitlichen Teilschnitt gezeigte Spule 13 ist als Doppelspule zur Aufnahme zweier Schneidfäden erkennbar. Auf der oberen Stirnseite 14 sind ein Bund 15 sowie der Anschlag 28 und der Leitkörper 30 zu erkennen.

Gemäß Figur 4 zeigt die Draufsicht auf die Stirnseite 14 der Spule 13, daß mit dem ersten Anschlag 28 identische, vier Anschläge 29, 31, 33, 35 auf einem ersten Teilkreis 27 in gleichmäßigem Abstand zueinander angeordnet sind und daß mit dem ersten Leitkörper 30 identische, vier Leitkörper 41, 43, 45, 47 auf einem zweiten Teilkreis 48, konzentrisch zur Mitte der Spule 13 in gleichmäßigem Abstand zueinander sowie zu den Anschlägen 28, 29, 31, 33, 35 angeordnet sind. Die Anschläge 28, 29, 31, 33, 35 haben auf ihrer in Betrachtungsrichtung linken Seite jeweils eine Anschlagfläche 50, 51, 52, 53, 54, auf deren abgewandter Seite sich Verstärkungsrippen 56, 57, 58, 59, 60 befinden. Die Leitkörper 30, 41, 43, 45, 47 haben auf ihrer jeweils radial nach innen zeigenden Seite Leitflächen 62, 63, 64, 65, 66. Eine den Anschlag 28 mittig durchtretende, durch den Spulenmittelpunkt fuhrende Radiale 67 schneidet oder tangiert zumindest den Anfang 68 des Leitkörpers 30.

Die jeweils den Anfangen 68 bis 72 gegenüberliegenden Seiten der Leitkörper 30, 41, 43, 45, 47 bestimmen deren Enden 74, 75, 76, 77, 78.

Die Anschlagflächen 50 bis 54 der Anschläge 28, 29, 31, 33, 35 verlaufen gegenüber der Radialen 67 um 30° geneigt, in Richtung des Pfeiles 42 um den Spulenmittelpunkt gedreht.

Die Leitflächen 62 bis 66 verlaufen vom Anfang 68 bis 72 bis zum Ende 74 bis 79 gekrümmt vom größeren, zweiten Teilkreis 48 zum kleineren Teilkreis 27.

An der Anschlagfläche 50 des ersten Anschlags 28 anliegend ist strichpunktiert die Kontur des Nockens 26 gezeichnet. Damit ist dessen Relativlage gegenüber dem Anschlag 50 in der Verriegelungsstellung und dessen Neigung um 30 ° gegenüber einer Radialen 49 gezeigt.

In Figur 5 ist die der oberen Stirnseite 14 der Spule 13 zugewandte Seite des Schiebers 16 gezeigt, wobei dessen Langloch 22 und der Nocken 26 deutlich erkennbar sind. Die Anlagefläche 25 des Nockens 26, die unter einem Winkel $\beta$ von etwa 30°, Bezugszeichen 55, gegenüber der nicht näher bezeichneten Mittelachse des Schiebers 16 verläuft, ist erkennbar.

In Figur 6 ist ein segmentartiger Ausschnitt der oberen Stirnseite 14 der Spule 13 gezeigt, wobei sich der Nocken 26 in seiner Verriegelungsposition gegenüber dem Anschlag 28 befindet. Die Anlagefläche 25 stützt sich an der Anschlagfläche 50 ab. Beide Flächen verlaufen unter dem Winkel $\beta$ von 30°, Bezugszeichen 55, zur Radialen 49. Auf der linken Seite in einem Abstand zum Anschlag 28 ist der Anschlag 35, auf der rechten Seite der Anschlag 29 erkennbar. Außerdem befindet sich in Betrachtungsrichtung links des Anschlags 28 der Leitkörper 47 und rechts von diesem der Leitkörper 30. Der Nocken 26 hat eine radial äußere und eine radial innere Stirnfläche 80, 81. Der Anschlag 28 hat eine radiale äußere und eine radial innere Stirnfläche 82, 83.

In Figur 7 ist gezeigt, wie infolge zunehmender Fliehkraft durch eine Drehzahlerhöhung der Spule 13 aufgrund gekürzter Schneidfäden der Schieber 16 den Nocken 26 radial nach außen trägt, wobei das Kräftegleichgewicht zwischen dem Nocken 26 und dem Anschlag 28 soweit verändert wird, daß der Anschlag 28 und damit die Spule 13 in Betrachtungsrichtung nach rechts verdreht werden. Dabei geht die Haftreibung zwischen der Anlagefläche 25 und Anschlagfläche 50 in Gleitreibung über. Der Nocken 26 tritt zwischen dem Ende 78 des Leitkörpers 47 und dem Anschlag 28 radial nach außen in seine Entriegelposition. Wenn der Nocken 26 seine Endposition erreicht hat und den Anschlag 28 vollständig freigibt, kann dieser unter dem Nocken 26 an diesem vorbeifahren.

In Figur 8 ist der Nocken 26 in seiner radial äußersten Entriegelungsposition gezeigt, wobei seine radial äußere Stirnfläche 80 sich an der Leitfläche 62 des Leitkörpers 30 abstützt. Die Spule 13 hat sich gemäß dem Pfeil 42 weitergedreht, da der Anschlag 28 nun nicht mehr durch den Nocken 26 blockiert ist.

In Figur 9 ist der Nocken 26 kurz vor Erreichen seiner neuen Verriegelungsposition gegenüber dem Anschlag 29 gezeigt, wobei er durch die Leitfläche 62 am Ende 74 des Leitkörpers 41 in seine radial innere Position verschoben worden ist.

Es ist aus den Figuren 6 bis 9 erkennbar, daß der Nocken 26 bzw. der Schieber 16 ohne Federkraft, nur durch Massenträgheitskräfte zwischen seinen Entriegelungs- und Verriegelungspositionen bewegt wird und nur durch das Kräftegleichgewicht an den schrägen Anlageflächen 25 und jeweils einer der Anschlagflächen 50 der einander identischen Anschläge 28, 29, 31, 33, 35 gehalten wird.

Die Abschrägung der Anlagefläche 25 bzw. der Anschlagfläche 50 gegenüber der Radialen 49 um den Winkel $\beta$, 30°, ist abhängig vom Spulendurchmesser, der Spulenmasse, der Arbeitsdrehzahl der Spule und der möglichen Differenzdrehzahl bei verschlissenem Schneidfaden 36, 38 gewählt worden und kann selbstverständlich bei einem erfindungsgemäßen Gerät mit anderen Parametern größer oder kleiner sein.

Der Abstand der Anschläge 28, 29, 31, 33, 35 voneinander auf dem Teilkreis 27 entspricht der nachstellbaren Fadenlänge, um die ein verkürzter Schneidfaden 36, 38 automatisch jeweils wieder verlängert wird.

Es ist üblich, eventuell eingestellte Überlängen des Schneidfadens durch eine begrenzende Schneidkante in der Bewegungsbahn des Schneidfadens am Gehäuse des Gerätes abzuschneiden und damit die Länge des freien Endes 37, 39 automatisch annähernd konstant zu halten.

Der Hub des Schiebers 16 wird begrenzt durch die Differenz des größeren Durchmessers 24 des Langlochs 22 gegenüber dem Durchmesser der Antriebswelle 12 und durch die elastischen Anschläge 11, 11', an denen die Stirnseite des Schiebers 16 bei dessen maximaler Auslenkung zur Anlage kommt. Die in Betrachtungsrichtung linke Seite des Schiebers 16 entsprechend Figur 1 ist leichter als die in Betrachtungsrichtung rechte Seite mit dem Nocken 26.

Der Massenunterschied zwischen den beiden Seiten ist so berechnet, daß bei einer bestimmten Drehzahl des Topfes 10, insbesondere bei einer bestimmten Schneidfadenlänge, die den Schieber 16 radial bewegende Kraft größer ist als die radiale Gegenkraftkomponente zwischen der Anlagefläche 25 des Nockens 26 und der Anschlagfläche 50 des Anschlags 28 bzw. entsprechend den anderen Anschlägen 29, 31, 33, 35.

In Figur 10 ist ein Nocken 126 auf seinem in zehn Einzelschritte unterteilten Weg zwischen dem Anschlag 128, entlang dem Leitkörper 130 zu dem benachbarten Anschlag 129 gezeigt. Der Weg ist zehnfach unterteilt, wobei der Nocken 126 in seiner jeweiligen Position 1 bis 10 mit den Ziffern 1 bis 10 gekennzeichnet ist. Der Nocken 126 ist ohne den ihn tragenden Schieber dargestellt. Dieser soll prinzipiell wie der Schieber 16 gemäß Figur 1 ausgestaltet sein.

Der Querschnitt des Nockens 126 ist nierenförmig. Sein in Betrachtungsrichtung unteres Ende trägt eine erste, gekrümmte Gleitfläche 125. Diese dient zum Abstützen an der Anlagekante 128" und an der konkaven, sich abflachenden Anschlagfläche 150 des Anschlags 128. An seinem oberen Ende trägt der Nocken 126 eine zweite Gleitfläche 125' zum Entlanggleiten an der konkaven Leitfläche 162 eines Leitkörpers 130.

Der Anschlag 128 hat einen hakenförmigen Querschnitt. Ein gegenüber der Radialen geneigter, gerader Arm 128' des Anschlags 128 bildet die dem Nocken 126 zugewandte Anlagekante 128", die radial nach außen in die Anschlagfläche 150 übergeht. Die konkave Anschlagfläche 150 hat eine Neigung $\beta$ gegenüber einer parallel zur Geraden G verlaufenden Geraden G". Die Gerade G entspricht dabei der Symmetrieachse des nichtdargestellten Schiebers, der den Nocken 126 trägt und dessen Verschiebeweg x bestimmt. Der Winkel $\beta$ wird mit zunehmendem Abstand der Anschlagfläche 150 vom Spulenmittelpunkt 112' größer. Daher ergibt sich die Abflachung der Kontur der Anschlagfläche 150.

Die Kontur der Anschlagfläche 150 des Anschlags 128 folgt in ihrem Verlauf im wesentlichen der nachstehend mathematisch definierten Abhängigkeit des Winkels $\beta$ vom Verschiebeweg X des Nockens 126 entlang der Geraden G:

$$\frac{\cos\beta - \mu\sin\beta}{\sin\beta + \mu\cos\beta} = \frac{k_{schalt}}{m_s(e_s + x)(r_k + x)}$$

Dabei sind gemäß der vorstehenden Formel mit $r_k$ der Abstand der Drehachse zum Kontaktpunkt bei einem Nockenverschiebeweg X = 0, d.h. wenn die Gleitfläche 125 des Nockens 126 sowohl an der Anschlagfläche 150 als auch an der Anlagekante 128" des Anschlags 128 anliegt, mit $m_s$ die Schiebermasse, mit $e_s$ die Exzentrizität und mit $k_{schalt}$ der Quotient aus dem Entriegelungsmoment $M_{schalt}$ und dem Quadrat der Winkelgeschwindigkeit $\omega$, eine rechnerische Größe, bezeichnet. Der Gleitwert des Kontaktes ist $\mu$. Das Entriegelungsmoment $M_{schalt}$ ergibt sich aus der Mindest-Fadenfliehkraft und deren wirksamem Hebel, der sich aus dem Wickelradius bestimmt. Sechs Punkte der Kontur der Anschlagfläche 150 gemäß Figur 10 ergeben sich durch Einsetzen folgender Werte in die vorgenannte Formel: $m_s$ = 6,3 g, $e_s$ = 5 mm, $r_k$ = 20,5 mm, $K_{schalt}$ = 883,4 g x mm$^2$, $\mu$ = 0,2 mit dem nachstehenden Ergebnis:

| x (mm) | 0 | 1 | 2 | 3 | 4 | 5 |
|---|---|---|---|---|---|---|
| $\dfrac{\cos\beta - \mu\sin\beta}{\sin\beta + \mu\cos\beta}$ | 1,368 | 1,087 | 0,89 | 0,746 | 0,636 | 0,55 |
| $\beta$ (°) | 24,8 | 31,3 | 37,0 | 42,0 | 46,2 | 49,9 |

Der Leitkörper 130 hat eine Leitkante 162, an der der Nocken 126 mit seiner zweiten Gleitkante 125' auf dem Weg in seine Arretierstellung zum benachbarten Anschlag 129 entlanggleitet. Die Leitfläche 162 des Leitkörpers 130 endet in einem radialen Abstand vom Spulenmittelpunkt 112', der kleiner ist als der radiale Abstand der Anschlagfläche 150 des Anschlags 128 vom Spulenmittelpunkt 112'.

Der Bewegungsablauf des Nockens 126 beginnt in der mit der Ziffer 1. bezeichneten Position. Hier befindet sich der Nocken 126 in seiner Verriegelungsposition mit einem Verschiebeweg = Null bzw. bei $r_k$ und stützt sich mit seiner Gleitfläche 125 sowohl an der Anlagekante 128" als auch an der Anschlagfläche 150 des Anschlags 128 ab.

Der Nocken 126 mit der Ziffer 2. hat mit seiner Gleitkante 125 das Ende der Anschlagfläche 150 des Anschlags 128 und damit das Ende der Verrieglungsposition erreicht, wobei er durch seine radiale Bewegung den Anschlag 128 und mit ihm die gesamte Spule 113 in Betrachtungsrichtung nach rechts verschoben hat, weil aufgrund eines gekürzten Schneidfadens dessen Fliehkraft kleiner ist als die Fliehkraft des den Nocken 126 tragenden Schiebers. Dadurch kann der Nocken 126 radial weiter nach außen treten in die mit der Ziffer 3. bezeichnete Entriegelungsposition. Diese Position ist durch Anschläge bestimmt, die den Weg des Schiebers begrenzen - entsprechend dem zu Figur 1 erläuterten Schieber 16 und den Anschlägen 11.

Der Nocken 126 mit der Ziffer 4. kann sich aus der Entriegelungsposition nicht weiter radial nach außen bewegen, sondern es gleitet an ihm bzw. an seiner Gleitfläche 125' die Leitfläche 162 des Leitkörpers 130 entlang, wobei sich die Spule 113 um den Spulenmittelpunkt 112' in Betrachtungsrichtung nach links dreht. Dabei liegt die Gleitfläche 125' der Nocken 126 mit den Ziffern 5., 6. und 7. mit einem zunehmend größeren Flächenanteil an der Leitfläche 162 an, wobei der Nocken 126 radial nach innen geführt wird.

Der Nocken 126 mit der Ziffer 8. ist beim Entlanggleiten an der Leitfläche 162 - durch weiteres Verdrehen der Spule 113 infolge der mit der Relativverschiebung zunehmenden Schneidfadenlänge und dessen entsprechend zunehmender Fliehkraft - an seiner Endlage radial innen angekommen.

Der Nocken 126 mit der Ziffer 9. liegt mit seiner Gleitfläche 125 an der Anlagekante 129" des Anschlags 129 an und nimmt hier seine radial am weitesten innenliegende Position gegenüber dem Spulenmittelpunkt 112' ein. Der Nocken 126 mit der Ziffer 10 bewegt sich wieder radial nach außen, um gegenüber dem Anschlag 129 die gleiche Position einzunehmen, wie der mit der Ziffer 1 bezeichnete Nocken 126 gegenüber dem Anschlag 128.

Damit ist ein Regelschritt zur Fadennachstellung beendet. Weitere, gleiche Regelschritte laufen jeweils ab, sobald der Schneidfaden zu kurz geworden ist.

Die Figur 11 zeigt eine Ansicht der der Spule 113 zugewandten Seite des Schiebers 116 mit dem Nocken 126 gemäß Figur 10 und verdeutlicht die Lage der Gleitflächen 125, 125' gegenüber dem Langloch 122, das dem Langloch 22 gemäß Figur 5 entspricht.

Die Figur 12 zeigt den Nocken 126 gemäß Figur 11 in der Draufsicht als Einzelheit, wobei die Gleitkanten 125, 125' deutlich erkennbar sind.

Die Figur 13 zeigt eine vollständige, räumliche Darstellung der Spule 113 gemäß Figur 10 mit den Anschlägen 128, 129, 131, 133, 135, sowie den Leitkörpern 130, 141, 143, 145, 147.

Figur 14 zeigt eine schematische Darstellung der Spule 13, 113 mit den nach außen tretenden Schneidfäden 36, 38; 136, 138 und mit den wirkenden dynamischen Kräften. Das um die Spulenmitte 12'; 112' wirkende Spulenmoment M ist das Produkt aus der Fliehkraft der rotierenden Fäden $F_F$ und dem Wickelradius $r_F$. Die Fliehkraft $F_F$ ist das Produkt aus der Fadenmasse m1 (von der Spulenmitte 12; 112 aus in der Fadenlinie gemessen), aus dem Schwerpunkt-Abstand $r_1$ des Fadens und aus dem Quadrat der Winkelgeschwindigkeit w.

Das Spulenmoment und die Fliehkraft werden durch die Ausgestaltung des Schiebers bzw. durch die Geometrie des Nockens 126, des Anschlags 128 und des Leitkörpers 130 so im Gleichgewicht gehalten, daß ein Auslösen der Fadennachstellung nicht ungewollt eintreten kann, sondern nur dann, wenn eine bestimmte Mindestlänge des Schneidfadens unterschritten wird und tatsächlich nachgestellt werden muß, wobei am Ende des Schneidfadennachstellvorgangs der Nocken 126 wieder eine der ursprünglichen gleichende Verriegelungsstellung erreicht, aus der heraus er beliebig häufig in die Entriegelungsstellung verstellbar ist, damit sich die Fadennachstellung entsprechend dem ersten Regelschritt bis zum Aufbrauchen des Schneidfadens wiederholen kann.

Die Figur 15 zeigt eine Kurve, die dem Verlauf der Kontur der Leitfläche 162 gemäß Figur 10 entspricht und die in Polar-Koordianten dargestellt bzw. bestimmt ist, d.h. für Winkelpositionen von $\varphi_1$ bis $\varphi_2$ des Eingriffspunktes der Gleitfläche 125' gegenüber der Leitfläche 162 sind die zugehörigen Werte für $r_1$ bis $r_2$ ermittelbar.

Damit der Nocken 126, wie zu Figur 10 beschrieben, tatsächlich in seine der vorherigen Position entsprechende Lage zurückgestellt wird, ist die Kontur der Leitfläche 162 des Leitkörpers 130 so ausgestaltet, daß sie der mathematischen Beziehung folgt:

$$\frac{dr}{d\varphi} = r \, \frac{Z(\varphi)\, r \cdot \mu + (\mu^2 - 1)\, M(\varphi)}{Z(\varphi)\, r + 2\mu\, M(\varphi)} = F(r, \varphi)$$

Dabei sind gemäß der vorstehenden Formel mit r der Abstand der Leitfläche 162 von der Spulenmitte 112', mit dr ein infinitesimal kleiner Teil von r, mit $\varphi_1$ bis $\varphi_2$ die Winkel zwischen einer Bezugsradialen $r_0$, die durch das in der Betrachtungsrichtung linke Ende des Leitkörpers 130 führt, und der Radialen des ersten bzw. letzten Eingriffspunktes der Gleitfläche 125' des Nockens 126 an der Leitfläche 162 des Leitkörpers 130, mit Z die Zentrifugalkraft am Nocken 126, mit µ der Reibwert zwischen der Fläche 125' und der Kontur 162 und mit M das sich aus der Fadenfliehkraft und deren wirksamen Hebel um den Spulenmittelpunkt 112' ergebende Spulenmoment bezeichnet, wobei der Hebel sich aus dem Wickelradius des Schneidfadens bestimmt.

In dieser Gleichung ist die Winkelgeschwindigkeit nicht enthalten. Dies bedeutet, daß das Kräftegleichgewicht unabhängig von der Winkelgeschwindigkeit der Spule 113 einstellbar ist. Durch numerische Auswertung der Gleichung wird die Kontur der Leitfläche 162 des Leitkörpers 130 gemäß Figur 10 und 13 bzw. entsprechend dem Kurvenverlauf im x-y-Koordinatensystem nach Figur 15 gestaltet, das der Fläche der Spulenweite entspricht, wobei der Schnittpunkt der x-y-Achsen der Spulenmitte 112' entspricht.

Die diesem Kurvenverlauf zugrunde liegende mathematische Beziehung bestimmt für die Leitfläche 162 einen Verlauf, durch den sich an jedem Punkt zwischen dem Nocken 126 und der Leitfläche 162 ein Kräftegleichgewicht einstellt, bei dem für einen vorgegebenen Reibwert $\mu$ ständig Gleitreibung nahe der Grenze zur Haftreibung vorliegt. Der Anfang und das Ende der Leitfläche 162 wird durch einen Kreissektor bestimmt, der entsprechend der Faden-Mindestnachstellänge festgelegt wird. Durch diesen Kreissektor wird auch die Anordnung des Anschlags 128 gegenüber dem Leitkörper 130 bestimmt.

Der Verlauf der Kontur der Leitfläche 162 sichert, daß auch bei einem eventuell höheren Reibwert zwischen dem Nocken 26; 126 und der Leitfläche 62; 162 der Nocken 26, 126 nicht an der Leitfläche 62; 162 klemmt. Das System muß also etwas leichtgängiger sein als nach dem mathematischen Idealfall berechnet.

Die Praxis zeigt, daß bei Reibwerten $\mu$ = 0,1 bis 0,15 das Zurückstellen des Nockens 126 durch Entlanggleiten an der Leitfläche 162 störungsfrei funktioniert. Insbesondere der bei Bewegungsabläufen im Grenzbereich zwischen Haft- und Gleitreibung bekannte Stick-Slip-Effekt wird damit sicher vermieden.

Dem Ausführungsbeispiel für die Kontur der Leitfläche 162 gemäß Figur 15 wurden folgende Werte zugrundegelegt:

Fadendichte 0,023 g/mm
Gehäuseradius $r_G$ 45 mm
Anfangs-Fadenlänge $l_0$ 95 mm
Wickelradius $r_F$ 20 mm
Schiebermasse m 6,3 g
Schwerpunktabstand a 19,1 mm
Anfangspunkt der Leitfläche 162 r1 = 32,1 mm bei $\varphi 1$ = 0,1262 rad
Endpunkt der Leitfläche 162 $r_2$ = 20, 9 mm bei $\varphi_2$ = 0,986 rad

**Patentansprüche**

1.  Gerät zum Schneiden von Pflanzen mit mindestens einem um eine Drehachse (12; 112) kreisenden, radial von dieser abstehenden Schneidfaden (36, 38), der auf eine Spule (13, 113) aufgewickelt ist, die in einem drehend angetriebenen Topf (10) zur Drehmitnahme angeordnet ist, wobei der Topf (10) an seinem Umfang mindestens eine Öffnung aufweist, durch die ein freies Ende (37, 39) des Schneidfadens (36, 38) nach außen tritt, wobei ein drehfest und radial zur Drehachse (12; 112) verschiebbar im Topf (10) geführter Schieber (16; 116 ) die Spule (13; 113) gegenüber dem Topf (10) mittels eines Nockens (26; 126) drehfest arretiert bzw. freigibt, so daß durch Drehung der Spule (13; 113) gegenüber dem Topf (10) die Länge des freien Endes (37, 39) des Schneidfadens (36, 38) nachstellbar ist, wobei der Schieber (16; 116) sich durch Zentrifugalkraft bei Verkürzung des freien Endes (37, 39) des Schneidfadens (36, 38), beispielsweise durch Abnutzung, aus seiner Verriegelungsposition in seine Entriegelungsposition verstellt, dadurch gekennzeichnet,

    daß der Schieber (16; 116) gegenüber der Spule (13; 113) nur durch das Kräftegleichgewicht der Massen-Abstützkräfte zwischen seinem Nocken (26; 126) und einem spulenseitigen Anschlag (28; 128) in seiner Verriegelungsposition gehalten wird, aus der er durch Fliehkraft in seine Entriegelungsposition verschoben wird und während der dadurch freigegebenen Relativdrehung der Spule (13; 113) gegenüber dem Topf (10) durch die Massen-Abstützkraft zwischen seinem Nocken (26; 126) und einer spulenseitigen Leitfläche (62; 162) eines Leitkörpers (130) in die Verriegelungsposition zurückgestellt wird.

2.  Gerät nach Anspruch 1, dadurch gekennzeichnet, daß der Nocken (26; 126) eine seitliche Anlagefläche (25) bzw. Gleitflächen (125, 125') hat, mit denen er sich an einer Anschlagfläche (50; 150) des Anschlags (28; 128) abstützt, wobei die Anlagefläche (25) bzw. die Gleitflächen (125, 125') und die Anschlagfläche (50; 150), vorzugsweise um 30°, gegenüber der Verschieberichtung des Nockens (26; 126) geneigt angeordnet sind.

3.  Gerät nach Anspruch 1 oder 2, daß die Anschlagfläche (150) des Anschlags (128) mit zunehmendem radialen Abstand von der Antriebswelle (12; 112) eine sich zunehmend abflachende Kontur hat.

4.  Gerät nach Anspruch 3, dadurch gekennzeichnet, daß die Kontur der Anschlagfläche (150) konkav gekrümmt ist.

5.  Gerät nach Anspruch 3 oder 4, dadurch gekennzeichnet, daß die Kontur der Anschlagfläche (150) in folgender Weise durch den Anstiegswinkel $\beta$ und den Verschiebeweg x des Nockens (126), verknüpft in folgender mathematischen Beziehung, vorgegeben ist:

$$\frac{\cos \beta - \mu \sin \beta}{\sin \beta + \mu \cos \beta} = \frac{k_{schalt}}{m_s(e_s + x)(r_k + x)} \; ; \text{wobei}$$

$r_k$ der Abstand der Drehachse zum Punkt X = 0, $\mu$ der Reibwert, $m_s$ die Schiebermasse, $e_s$ die Exzentrizität des Schiebers und $k_{schalt}$ eine rechnerische Größe des Quotienten aus dem Entriegelungs-Schaltmoment $M_{schalt}$ und dem Quadrat der Winkelgeschwindigkeit $\omega$ der Spule 113 ist.

6. Gerät nach einem der Ansprüche 1 bis 5, dadurch gekennzeichnet, daß die Anschläge (28, 29, 31, 33, 35) an ihrer Rückseite Stützrippen (56, 57, 58, 59, 60) aufweisen.

7. Gerät nach einem der Ansprüche 1 bis 6, dadurch gekennzeichnet, daß die Spule (13) auf einem kleineren Teilkreis (27) die Anschläge (28, 29, 31, 33, 35) in gleichmäßigen Abständen und auf einem größeren Teilkreis (48) die Leitkörper (30, 41, 43, 45, 47) in zueinander gleichmäßigen Abständen trägt.

8. Gerät nach Anspruch 7, dadurch gekennzeichnet, daß der Abstand der zwei Teilkreise (27, 48) größer ist als die größte radiale Breite des Nockens (26).

9. Gerät nach einem der vorhergehenden Ansprüche, dadurch gekennzeichnet, daß der Topf (10) mindestens einen die radiale Verschiebung des Schiebers (16) begrenzenden, elastischen Anschlag (11) hat.

10. Gerät nach einem der Ansprüche 2 bis 9, dadurch gekennzeichnet, daß die Kontur der Anschlagfläche (150) durch zwei winklig zueinander verlaufende Geraden bestimmt wird.

11. Gerät nach einem der vorhergehenden Ansprüche, dadurch gekennzeichnet, daß die Kontur der Leitfläche (62; 162) des Leitkörpers (130) in folgender Weise durch den Anstiegswinkel x gegenüber der durch den Spulenmittelpunkt (12'; 112') gehenden Radialen R bestimmt ist, verknüpft in folgender mathematischen Beziehung:

$$\frac{dr}{d\varphi} = r \, \frac{Z(\varphi)r \cdot \mu + (\mu^2 - 1) \, M(\varphi)}{Z(\varphi)r + 2\mu M(\varphi)} = F(r,\varphi)$$

wobei bedeuten:

r - der Abstand der Leitfläche (162) vom Spulenmittelpunkt (112')
dr - einen infinitesimal kleiner Teil von r
$\varphi$ - der Winkel der Leitfläche (162) gemessen an der Radialen vom Kontaktpunkt durch den Spulenmittelpunkt (112') und einer Bezugsdiagonalen
Z - die Zentrifugalkraft am Nocken (126)
$\mu$ - der Reibwert zwischen der Gleitfläche (125') des Nocken (126) und der Kontur der Leitfläche (162)
M - das Spulenmoment

## Claims

1. Apparatus for cutting plants having at least one cutting line (36, 38), which circulates about an axis of rotation (12; 112), projects radially from the latter and is coiled on a spool (13, 113), which is arranged in a rotatingly driven cup (10) for rotary driving, the cup (10) having on its circumference at least one opening, through which a free end (37, 39) of the cutting line (36, 38) passes to the outside, a slide (16; 116) which is guided in the cup (10) in a rotationally fixed and, with respect to the axis of rotation (12; 112), radially displaceable manner arresting the spool (13; 113) in a rotationally fixed manner with respect to the cup (10) by means of a cam (26; 126), or releasing the said spool, with the result that the length of the free end (37, 39) of the cutting line (36, 38) is readjustable by turning of the spool (13; 113) with respect to the cup (10), the slide (16; 116) being adjusted from its locking position into its unlocking position by centrifugal force when the free end (37, 39) of the cutting line (36, 38) is shortened, for example by wear, characterized in that the slide (16; 116) is held in its locking position with respect to the spool (13; 113) only by the equilibrium of forces of the mass-supporting forces between its cam (26; 126) and a stop (28; 128) on the spool, is displaced out of the said locking position into its unlocking position by centrifugal force and, during the thereby released relative rotation of the spool (13; 113) with respect to the cup (10), is returned into the locking position by the mass-supporting force between its cam (26; 126) and a directing face (62; 162) of a directing element (30; 130) on the spool.

2. Apparatus according to Claim 1, characterized in that the cam (26; 126) has a lateral bearing face (25) or sliding faces (125, 125'), by which it is supported on a stopping face (50; 150) of the stop (28; 128), the bearing face (25) or the sliding faces (125, 125') and the stopping face (50; 150) being arranged such that they are inclined, preferably by 30°, with respect to the displacing direction of the cam (26; 126).

3. Apparatus according to Claim 1 or 2, characterized in that, with increasing radial distance from the drive shaft (12; 112), the stopping face (150) of the stop (128) has an increasingly flattening contour.

4. Apparatus according to Claim 3, characterized in that the contour of the stopping face (150) is concavely curved.

5. Apparatus according to Claim 3 or 4, characterized in that the contour of the stopping face (150) is predetermined in the following way by the angle or rise $\beta$ and the path of displacement x of the cam (126), combined in the following mathematical relationship:

$$\frac{\cos \beta - \mu \sin \beta}{\sin \beta + \mu \cos \beta} = \frac{k_{schalt}}{m_s(e_s + x)(r_k + x)} \; ; \text{where}$$

$r_k$ is the distance of the axis of rotation from the point x = 0, $\mu$ is the coefficient of friction, $m_s$ is the mass of the slide, $e_s$ is the eccentricity of the slide and $k_{schalt}$ is an arithmetic value for the quotient of the unlocking switching moment and $M_{schalt}$ and the square of the angular velocity $\omega$ of the spool 113.

6. Apparatus according to one of Claims 1 to 5, characterized in that the stops (28, 29, 31, 33, 35) have on their rear side supporting ribs (56, 57, 58, 59, 60).

7. Apparatus according to one of Claims 1 to 6, characterized in that the spool (13) bears on a smaller pitch circle (27) the stops (28, 29, 31, 33, 35) at uniform intervals and bears on a larger pitch circle (48) the directing elements (30, 41, 43, 45, 47) at mutually uniform intervals.

8. Apparatus according to Claim 7, characterized in that the distance between the two pitch circles (27, 48) is greater than the greatest radial width of the cam (26).

9. Apparatus according to one of the preceding claims, characterized in that the cup (10) has at least one flexible stop (11), limiting the radial displacement of the slide (16).

10. Apparatus according to one of Claims 2 to 9, characterized in that the contour of the stopping face (150) is determined by two straight lines running at an angle with respect to each other.

11. Apparatus according to one of the preceding claims, characterized in that the contour of the directing face (62; 162) of the directing element (130) is determined in the following way by the angle of rise x with respect to the radial R passing through the centre point of the spool (12'; 112'), combined in the following mathematical relationship:

$$\frac{dr}{d\varphi} = r \frac{Z(\varphi)r \cdot \mu + (\mu^2 - 1) \, M(\varphi)}{Z(\varphi)r + 2\mu M(\varphi)} = F(r,\varphi)$$

where:

r is the distance of the directing face (162) from the centre point of the spool (112')
dr is an infinitesimally small part of r
$\varphi$ is the angle of the directing face (162), measured at the radial of the contact point through the centre point of the spool (112') and a reference diagonal
Z is the centrifugal force at the cam (126)
$\mu$ is the coefficient of friction between the sliding face (125') of the cam (126) and the contour of the directing face (162) and

M is the spool moment.

## Revendications

1. Appareil pour couper des plantes comprenant au moins un fil de coupe (36, 38) radialement en saillie par rapport à un axe de rotation (12, 112) et qui est enroule sur une bobine (13, 113) placée pour l'entraînement en rotation dans un pot (10) qui est entraîné en rotation avec la bobine,

   - le pot (10) ayant au moins une ouverture à sa périphérie pour permettre à une extrémité libre (37, 39) du fil de coupe (36, 38) de sortir,
   - un tiroir (16, 116) guidé en coulissement dans le pot (10) de manière solidaire en rotation et radialement par rapport à l'axe de rotation (12, 112) bloque ou libère solidairement en rotation la bobine (13, 113) par rapport au pot (10) à l'aide d'une came (26, 126) de façon que par rotation de la bobine (13, 113) par rapport au pot (10), on puisse compléter la longueur de l'extrémité libre (37, 39) du fil de coupe (36, 38),
   - le tiroir (16, 116) se dégageant de sa position de verrouillage pour passer dans sa position de déverrouillage sous l'effet de la force centrifuge lorsque l'extrémité libre (37, 39) du fil de coupe (36, 38) se raccourcit par exemple par l'usure,
   caractérisé en ce que
   le tiroir (16, 116) est tenu dans sa position de verrouillage par rapport à la bobine (13, 113) uniquement par l'équilibre des forces d'appui de la masse entre sa came (26, 126) et une butée (28, 128) du côté de la bobine, ce tiroir étant coulissé dans sa position de déverrouillage par la force centrifuge et pendant le mouvement relatif de la bobine (13, 113) ainsi libérée par rapport au pot (10), par la force d'appui des masses entre sa came (26, 126) et une surface de guidage (62, 162) du côté de la bobine, d'un organe de guidage (130) est rappelé en position de verrouillage.

2. Appareil selon la revendication 1,
   caractérisé en ce que
   la came (26, 126) possède une surface d'appui latérale (25) ou des surfaces de glissement (125, 125') par lesquelles elle s'appuie contre une surface de butée (50, 150) de la butée (28, 128), la surface d'appui (25) ou les surfaces de glissement (125, 125') et la surface de butée (50, 150) étant de préférence inclinées de 30° par rapport à la direction de coulissement de la came (26, 126).

3. Appareil selon la revendication 1 ou 2,
   caractérisé en ce que
   la surface de butée (150) de la butée (128) a un contour qui s'aplatit de façon croissante avec l'augmentation de la distance radiale par rapport à l'arbre d'entraînement (12, 112).

4. Appareil selon la revendication 3,
   caractérisé en ce que
   le contour de la surface de butée (150) et à courbure concave.

5. Appareil selon la revendication 3 ou 4,
   caractérisé en ce que
   le contour de la surface de butée (150) est donné de la manière suivante par l'angle de pente (β) et la course de déplacement (x) de la came (126), selon la relation mathématique suivante :

$$\frac{\cos\beta - \mu\sin\beta}{\sin\beta + \mu\cos\beta} = \frac{k_{com}}{m_s(e_s + x)(r_k + x}$$

   dans laquelle :

   $r_k$     distance entre l'axe de rotation et le point X = 0,
   $\mu$     coefficient de frottement,
   $m_s$     masse du tiroir,
   $e_s$     excentricité du tiroir,
   $k_{cpm}$     grandeur de calcul du quotient du couple de commutation de déverrouillage $M_{dev}$ et du carré de la vitesse angulaire ω de la bobine (113).

6. Appareil selon l'une des revendications 1 à 5,
caractérisé en ce que
les butées (28, 29, 31, 33, 35) comportent des nervures d'appui (56, 57, 58, 59, 60) sur leurs faces arrière.

7. Appareil selon l'une des revendications 1 à 6,
caractérisé en ce que
la bobine (13) porte sur un petit cercle primitif (27) les butées (28, 29, 301, 33, 35) réparties à intervalles réguliers
et, sur un grand cercle primitif (48), les organes de guidage (30, 41, 43, 45, 47) suivant des intervalles réguliers.

8. Appareil selon la revendication 7,
caractérisé en ce que
la distance des deux cercles partiels (28, 48) est supérieure à la largeur radiale la plus grande de la came (26).

9. Appareil selon l'une quelconque des revendications précédentes,
caractérisé en ce que
le pot (10) possède au moins une butée élastique (10) qui limite le coulissement radial du tiroir (16).

10. Appareil selon l'une des revendications 2 à 9,
caractérisé en ce que
le contour de la surface de butée (150) est défini par deux droites faisant un angle l'une par rapport à l'autre.

11. Appareil selon l'une quelconque des revendications précédentes,
caractérisé en ce que
le contour de la surface de guidage (62, 162) de l'organe de guidage (130) est obtenu par la relation mathématique
suivante par les directions radiales R faisant l'angle de pente X par rapport au centre de gravité (12', 112') :

$$\frac{dr}{d\varphi} = r\ \frac{Z(\varphi)r \cdot \mu + (\mu^2 - 1)\ M(\varphi)}{Z(\varphi)\ r + 2\ \mu\ M\ (\varphi)} = F\ (r,\ \varphi$$

dans laquelle :

r : distance de la surface de guidage (162) et du centre (112') de la bobine,
dr : partie infinitésimale de r
φ : angle de la surface de guidage (162) mesuré sur la direction radiale entre le point de contact et le centre (112') de la bobine et une diagonale de référence,
Z : force centrifuge appliquée à la came (126),
μ : coefficient de frottement entre la surface de glissement (125') de la came (126) et le contour de la surface de guidage,
M : couple de la bobine.

FIG. 1

FIG. 2

FIG. 3

FIG. 4

FIG. 5

FIG. 6

FIG. 7

EP 0 752 812 B1

FIG. 8

FIG. 9

15

FIG. 10

FIG. 11

FIG. 12

FIG. 13

# FIG. 14

# FIG. 15